# EUROPÄISCHE PATENTSCHRIFT

(11) **EP 2 874 786 B1**
(45) Veröffentlichungstag und Bekanntmachung des Hinweises auf die Patenterteilung: **19.10.2016**
(21) Anmeldenummer: 13737841.0
(22) Anmeldetag: 18.07.2013
(51) Int. Cl.: B24B 41/00, B24B 49/00, B23Q 16/00

(54) **WERKZEUGMASCHINE MIT EINEM SPINDELKOPF SOWIE VERFAHREN ZUM POSITIONIEREN EINES SPINDELKOPFES EINER WERKZEUGMASCHINE**
MACHINE TOOL WITH A SPINDLE HEAD AND METHOD FOR POSITIONING A SPINDLE HEAD ON A MACHINE TOOL
MACHINE-OUTIL COMPRENANT UNE TÊTE DE BROCHE ET PROCÉDÉ DE POSITIONNEMENT D'UNE TÊTE DE BROCHE DE MACHINE-OUTIL

(30) Priorität: 20.07.2012 DE 102012106616
(43) Veröffentlichungstag der Anmeldung: 27.05.2015
(73) Patentinhaber: Fritz Studer AG, 3612 Steffisburg (CH)
(72) Erfinder: LUETHI, Michael, 3700 Spiez (CH); SCHNYDER, Mark, 1700 Freiburg (CH)
(74) Vertreter: Witte, Weller & Partner Patentanwälte mbB
(86) Internationale Anmeldenummer: PCT/EP2013/065234
(87) Internationale Veröffentlichungsnummer: WO 2014/013033

(56) Entgegenhaltungen:
- WO-A2-2007/096322

## Beschreibung

Die Erfindung betrifft eine Werkzeugmaschine zur Bearbeitung von Werkstücken, insbesondere eine Schleifmaschine, mit einer Werkstückaufnahme zur Aufnahme eines Werkstücks, und mit einem Spindelkopf zur Aufnahme eines Werkzeugs, insbesondere einer Schleifscheibe. Die Erfindung betrifft ferner ein Verfahren zum Positionieren eines Spindelkopfes einer Werkzeugmaschine zur Bearbeitung von Werkstücken, insbesondere einer Schleifmaschine.

Werkzeugmaschinen, insbesondere Schleifmaschinen, sind im Stand der Technik bekannt. So können beispielsweise Rundschleifmaschinen rotationssymmetrische Werkzeuge, etwa Schleifscheiben, aufweisen. Diese können in geeigneter Weise mit einem Werkstück zur Materialabtragung zusammenwirken. Rundschleifmaschinen können beispielsweise zum Außenrundschleifen, Innenrundschleifen oder zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Flächen können etwa auch exzentrisch ausgebildete Werkstückflächen bearbeitet werden, wenn die Werkstückaufnahme und die Werkzeugeinheit in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden. Ferner sind Werkzeugmaschinen bekannt, die eine kombinierte Bearbeitung von Werkstücken erlauben, etwa kombinierte Schleif- und Drehmaschinen.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht (axial) zwischen Spitzen aufgenommen ist, sondern etwa über Auflageschienen, Regelscheiben, Führungsrollen oder dergleichen aufgenommen und geführt werden kann.

Werkzeugmaschinen, insbesondere Schleifmaschinen, können verschiedene Betriebsmodi aufweisen. Beispielhaft kann in einem automatisierten (produktiven) Betriebsmodus eine zuvor programmierte Bearbeitungsaufgabe im Wesentlichen vollautomatisch abgearbeitet werden. Regelmäßig ist bei derartigen Betriebsmodi kein manueller Eingriff durch einen Bediener erforderlich. Zustellbewegungen, Vorschubbewegungen und weitere erforderliche Positionierungen des Werkzeugs können dank vorher hinterlegter Bearbeitungspfade durch die Werkzeugmaschine selbstständig vollzogen werden.

Es sind jedoch auch Betriebsmodi bekannt, bei denen eine zumindest teilweise manuelle Steuerung von Komponenten der Werkzeugmaschine, insbesondere des Spindelkopfes mit dem aufgenommenen Werkzeug, erforderlich ist. Hierzu gehören insbesondere Rüstvorgänge und Einrichtvorgänge. Ebenso ist es vorstellbar, den Spindelkopf der Werkzeugmaschine bei der Durchführung manueller Messoperationen durch einen Bediener (oder Einrichter) steuern zu lassen. Das Einrichten kann etwa erforderlich werden, wenn das Werkzeug (beispielsweise die Schleifscheibe) gewechselt oder zumindest abgerichtet wird. Hierzu kann es etwa erforderlich sein, definierte Referenzpunkte der Werkzeugmaschine, die beispielsweise am Maschinentisch oder Maschinenbett vorgegebenen sind, anzufahren. Hierfür besteht häufig die Möglichkeit, den Spindelkopf zunächst mittels einer Grobbewegung (Schnellgang) nahe an einen Referenzpunkt heranzuführen und anschließend mittels einer Feinbewegung (Kriechgang) den Referenzpunkt anzutasten, um das Anfahren abzuschließen.

Es sind Werkzeugmaschinen bekannt, bei denen der Bediener (oder Einrichter) den Spindelkopf über eine externe Bedienerschnittstelle steuern kann, die eine Eingabeeinheit aufweist. Bei der Eingabeeinheit kann es sich etwa um Taster, Ziffernfelder, berührungsempfindliche Bildschirme oder ähnliche Einrichtungen handeln. Ferner kann die Bedienerschnittstelle eine Ausgabeeinheit aufweisen, üblicherweise einen Bildschirm zur Darstellung absoluter und relativer Positionen und Verfahrwege. Auf diese Weise kann der Bediener "mittelbar" auf den Spindelkopf einwirken, um diesen wie gewünscht zu verfahren. Die Bedienerschnittstelle ist häufig mit der Werkzeugmaschine gekoppelt, jedoch systembedingt häufig derart angeordnet, dass der Bediener seine Aufmerksamkeit häufig nicht gleichzeitig sowohl auf die Eingabe- und Ausgabeeinheit als auch auf den (realen) Spindelkopf richten kann. Vielmehr ist es häufig erforderlich, abwechselnd die Bedienerschnittstelle und den Spindelkopf zu betrachten, um beim manuell gesteuerten Verfahren des Spindelkopfes die gewünschten Verfahrwege mit hinreichender Genauigkeit und Schnelligkeit und ohne Kollisionen auszuführen.

Vor diesem Hintergrund liegt der Erfindung die Aufgabe zugrunde, eine Werkzeugmaschine, insbesondere eine Schleifmaschine, sowie ein Positionierverfahren anzugeben, bei denen mit geringem Aufwand ein manuell gesteuertes Verfahren und Positionieren des Spindelkopfes gestattet ist, wobei das Verfahren und Positionieren möglichst schnell erfolgen können soll und weiterhin die Gefahr von Fehlbedienungen möglichst verringert ist.

Diese Aufgabe wird erfindungsgemäß durch eine Werkzeugmaschine zur Bearbeitung von Werkstücken, insbesondere Schleifmaschine, gelöst, mit einer Werkstückaufnahme zur Aufnahme eines Werkstücks, mit einem Spindelkopf zur Aufnahme eines Werkzeugs, insbesondere einer Schleifscheibe, wobei der Spindelkopf relativ zur Werkstückaufnahme motorisch verfahrbar ist, wobei am Spindelkopf eine Handhabe angeordnet ist, die zumindest einen Aufnehmer aufweist, der dazu ausgebildet ist, eine Einwirkung auf die Handhabe zu erfassen, und wobei eine Steuereinrichtung vorgesehen ist, die dazu ausgebildet ist, in zumindest einem Betriebsmodus den Spindelkopf abhängig von den erfassten Einwirkungen auf die Handhabe definiert motorisch zu verfahren.

Die Aufgabe der Erfindung wird auf diese Weise vollkommen gelöst.

Erfindungsgemäß kann nämlich ein Bediener durch direktes Einwirken auf den Spindelkopf über die Handhabe das motorische Verfahren des Spindelkopfes veranlassen. Es kann sich für den Bediener der Eindruck eines unmittelbaren, direkten Bewegens des Spindelkopfes ergeben. Das Verfahren (auch: Positionieren) kann intuitiv erfolgen. Es versteht sich dabei, dass die Bewegung des Spindelkopfes nicht direkt, sondern über einen "Umweg" erfolgt, nämlich mittels motorischen Positioniervorgängen, die durch die Steuereinrichtung ausgelöst werden.

Beim Bediener (oder Einrichter) kann sich jedoch der Eindruck ergeben, dass der Spindelkopf allein durch menschliche Kraft verfahrbar ist. Das Verfahren des Spindelkopfes kann ferner vorteilhaft eine direkte Rückmeldung (Feedback) an den Bediener mit sich bringen. Der Bediener kann etwa durch Erhöhung der Kraft, die er auf die Handhabe ausübt, eine höhere Verfahrgeschwindigkeit bewirken. Eine Reduzierung der durch den Bediener aufgebrachten Kraft kann zu einer verringerten Verfahrgeschwindigkeit bis hin zum Stillstand des Spindelkopfes führen. Auf diese Weise kann sich eine besonders intuitive und einfache Positionierung des Spindelkopfes ergeben. Dies kann im Vergleich zu etablierten Lösungen deutlich schneller erfolgen, da der Bediener nicht ständig seine Aufmerksamkeit wechselseitig auf dem Spindelkopf und entfernt davon angeordnete Bedienerschnittstellen richten muss. Dies ist bei bekannten Werkzeugmaschinen dienlich, um sich vergewissern zu können, dass Bedienereingaben in gewünschte Spindelkopfbewegungen überführt werden.

Es versteht sich, dass die Handhabe bewusst nicht gestellfest an der Werkzeugmaschine oder etwa handgehalten (etwa als "Fernbedienung") ausgebildet ist. Vielmehr ist die Handhabe vorzugsweise fest am Spindelkopf, insbesondere direkt am Spindelkopf, angeordnet und mit diesem verfahrbar.

Bei der Werkzeugmaschine kann es sich insbesondere um eine Rundschleifmaschine, beispielsweise um eine Universalrundschleifmaschine handeln. Der Spindelkopf kann insbesondere als Schleifkopf mit einer Schleifspindel ausgeführt sein. Die Werkstückaufnahme kann etwa eine Werkstückspindel umfassen, die beispielsweise um einen Reitstock ergänzt werden kann. Die Werkstückaufnahme kann ferner Spanneinrichtungen (etwa Spannfutter) oder Aufnahmespitzen für das Werkstück aufweisen. Grundsätzlich kann die Werkstückaufnahme jedoch auch zum spitzenlosen Schleifen ausgebildet sein.

Es versteht sich, dass das relative Verfahren des Spindelkopfes gegenüber der Werkstückaufnahme etwa dadurch erfolgen kann, dass die Werkstückaufnahme fixiert ist und der Spindelkopf verfahren wird. Ebenso ist es jedoch auch denkbar, den Spindelkopf zu fixieren und die Werkstückaufnahme zu verfahren. Ferner ist eine kombinierte Relativbewegung denkbar, bei der sowohl der Spindelkopf als auch die Werkstückaufnahme relativ zueinander bewegt werden.

Bei der Handhabe kann es sich etwa um einen Griff oder Joystick handeln. Die Handhabe kann insbesondere als T-Griff, Bügelgriff, Griffschale, Zylindergriff, Ballengriff, Kugelgriff, Konusgriff, Pilzgriff oder Ähnliches ausgestaltet sein. Die Handhabe kann ferner mittels einer Griffstange (oder Schaft) mit dem Spindelkopf gekoppelt sein.

Der Aufnehmer kann etwa als Messaufnehmer ausgebildet sein und einen Handhabungssensor oder Handhabungsdetektor aufweisen.

Die Einwirkung auf die Handhabe erfolgt grundsätzlich durch den Bediener. Bei der Einwirkung kann es sich um eine Verformung, Auslenkung, Dehnung der Handhabe oder Ähnliches handeln. Die erfasste Einwirkung kann repräsentativ für eine bestimmte Betätigung der Handhabe sein, etwa für die Höhe und Richtung einer Betätigungskraft, die auf die Handhabe ausgeübt wird.

Abhängig von den erfassten Einwirkungen kann der Spindelkopf motorisch verfahren werden. Die Abhängigkeit kann etwa mittels eines Kennfeldes bestimmt werden, das Bewegungsparameter und Art und Größe erfasster Einwirkungen miteinander in Beziehung bringt. Grundsätzlich kann unter "abhängig" auch ein allgemeines Verhältnis wie etwa "proportional zu", "nicht verhältnisgleich, aber gleichgerichtet" und

Ähnliches verstanden werden. Diese Abhängigkeit kann etwa Bewegungsparameter der Verfahrbewegung wie Richtung, Weg, Geschwindigkeit, Beschleunigung oder Ähnliches betreffen.

Gemäß einer Ausgestaltung ist der Aufnehmer dazu ausgebildet, eine Handhabungskraft zu erfassen, die auf die Handhabe aufgebracht wird.

Die Handhabungskraft, mit der ein Bediener auf die Handhabe einwirkt, kann durch den Aufnehmer mittelbar oder unmittelbar erfasst werden. Eine mittelbare Erfassung kann etwa auf die Erfassung von Verformungen zurückgeführt werden, die sich aufgrund von (Werkstoff)Spannungen ergeben, die durch die Handhabungskraft bewirkt sind. Somit können bekannte Kraftmessprinzipien genutzt werden. Es versteht sich, dass gegebenenfalls keine hochgenaue absolute Bestimmung der Handhabungskraft erforderlich ist. Vielmehr geht es beispielhaft vorrangig darum, zu erfassen, "wie stark" und "in welcher Richtung" der Bediener auf die Handhabe einwirkt.

Gemäß einer weiteren Ausgestaltung weist die Werkzeugmaschine ferner einen Verfahrantrieb auf, der zumindest eine gesteuerte Achse für den Spindelkopf aufweist, wobei die Steuereinrichtung dem Verfahrantrieb Steuerbefehle zuführt, die abhängig von den erfassten Einwirkungen auf die Handhabe erzeugt sind.

Der Verfahrantrieb kann zumindest einen, üblicherweise eine Mehrzahl von Antrieben (etwa Motoren) aufweisen. Die Antriebe können etwa jeweils einer Achse zugeordnet sein. Die Antriebe können beispielhaft dem Spindelkopf, einem Maschinenbett oder einem diesen zwischengeordneten Schlitten zugeordnet sein. Bei dem Schlitten kann es sich etwa um einen Kreuzschlitten handeln, der zwei verfahrbare Achsen realisiert. Es ist grundsätzlich vorstellbar, den Spindelkopf entlang der zumindest einen gesteuerten Achse (etwa X-Achse oder Z-Achse) linear zu verfahren. Es ist jedoch auch vorstellbar, einen Antrieb vorzusehen, der es erlaubt, den Spindelkopf um eine Achse (beispielsweise B-Achse) definiert zu verschwenken oder zu verdrehen. Auch eine derartige Bewegung kann durch den Bediener durch Einwirkung auf die Handhabe initiiert werden.

Die Antriebe können grundsätzlich als Direktantriebe oder mittelbar gekoppelte Antriebe ausgebildet sein. Die Antriebe können mit Spindeln, beispielsweise Kugelumlaufspindeln, und mit Führungen, beispielsweise Schlittenführungen, gekoppelt sein.

Gemäß einer Weiterbildung der Werkzeugmaschine weist der zumindest eine Aufnehmer zumindest einen Sensor zur Erfassung von Verformungen der Handhabe auf.

Bei dem zumindest einen Sensor kann es sich etwa um Dehnungsmessstreifen handeln, die grundsätzlich zur mittelbaren Kraftmessung genutzt werden können. Die Sensoren können jedoch grundsätzlich auch als piezoelektrische, optische, induktive oder kapazitive Sensoren zur (mittelbaren) Kraftmessung ausgestaltet sein. Bei dem zumindest einen Sensor kann es sich um einen einzelnen Sensor oder aber um ein Sensorpaket oder einen Sensorarray handeln. Es versteht sich, dass Einzelsensoren in geeigneter Weise miteinander kombiniert werden können, um deutlichere Messergebnisse zu erlangen. Beispielsweise können Einzelsensoren auf einander gegenüberliegenden Seiten der Handhabe angeordnet sein. Hierbei ist es ermöglicht, Stauchungen und Dehnungen auf einer Druckseite bzw. einer Zugseite der Handhabe zu erfassen. Somit lässt sich ein deutlicheres Signal gewinnen, das die Verformung der Handhabe beschreibt und einen Rückschluss auf die einwirkende Kraft erlaubt.

Gemäß einer weiteren Ausgestaltung ist der zumindest eine Aufnehmer dazu ausgebildet, Verformungen der Handhabe in zumindest zwei Raumrichtungen zu erfassen.

Somit können Bedienereinwirkungen auch hinsichtlich ihrer Richtung ausgewertet werden. Auf diese Weise ist es etwa ermöglicht, den Spindelkopf entlang zweier Achsen kontrolliert zu verfahren.

Zur flächigen oder räumlichen Erfassung von Verformungen ist es zweckmäßig, eine Mehrzahl von Sensoren bei dem zumindest einen Aufnehmer vorzusehen. Die Sensoren können in geeigneter Weise zueinander ausgerichtet und orientiert angeordnet werden. Beispielhaft können die Sensoren gekreuzt, rosettenförmig oder in ähnlicher Weise angeordnet werden.

Es ist grundsätzlich auch vorstellbar, mit einer Torsionsbelastung der Handhabe einhergehende Verformungen zu erfassen. Auf diese Weise kann die Funktionalität der Werkzeugmaschine etwa dahingehend erweitert werden, dass auch eine definierte motorische Rotation oder Verschwenkung des Spindelkopfes um eine Achse (etwa B-Achse) durch Bedienereinwirkungen gesteuert werden kann.

Gemäß einer Weiterbildung der vorgenannten Ausgestaltungen ist es bevorzugt, wenn die Steuereinrichtung dazu ausgebildet ist, Steuerbefehle zu erzeugen, die zumindest einen Bewegungsparameter aufweisen, der abhängig von einer detektierten Handhabungskraft ist, insbesondere zumindest von einer Höhe oder Richtung der Handhabungskraft.

Die Bewegungsparameter, die in den Steuerbefehlen Niederschlag finden, können etwa Bewegungsrichtung, Weg, Geschwindigkeit, Beschleunigung, Verzögerung oder Ähnliches umfassen. Ferner kann etwa abhängig von einem Schwellwert ein AN-Signal oder ein AUS-Signal erzeugt werden, um das definierte motorische Verfahren des Spindelkopfes selektiv zu erlauben oder zu unterbinden. Zu diesem Zweck kann ferner auch eine sogenannte Zustimm-Information herangezogen werden. Die Zustimm-Information kann der Steuereinrichtung zugeleitet oder in der Steuereinrichtung erzeugt werden. Unter dem Begriff "Zustimmung" kann eine bewusste Freigabe einer Verfahrbewegung durch den Bediener verstanden werden. Die Zustimm-Information kann etwa wiedergeben, ob ein Bediener einen Aktivierungsschalter bzw. einen Zustimm-Schalter betätigt hat oder nicht. Auf diese Weise lassen sich unbeabsichtigte, durch Fehlbedienungen veranlasste Verfahrbewegungen vermeiden. Beispielhaft kann die Zustimm-Information ein digitales Signal enthalten, das die Zustände "Zustimmung vorhanden" und "keine Zustimmung vorhanden" annehmen kann.

Gemäß einer Weiterbildung dieser Ausgestaltung umfassen die Steuerungsbefehle eine definierte Verfahrgeschwindigkeit, die abhängig von der detektierten Handhabungskraft ist.

Die Höhe der (mittelbar) erfassten Handhabungskraft kann ausgewertet werden, um eine gewünschte Verfahrgeschwindigkeit für den Spindelkopf zu ermitteln. Mit anderen Worten kann durch Erfassung der Höhe und der Richtung der Handhabungskraft ein Handhabungsvektor bestimmt werden. Der Handhabungsvektor spiegelt sich in einem Verfahrvektor für den Spindelkopf wider, der beispielhaft durch Verfahrrichtung und Verfahrgeschwindigkeit gekennzeichnet ist.

Es versteht sich, dass die Steuereinrichtung alternativ etwa auch dazu ausgebildet sein kann, den Spindelkopf entlang einer Achse oder entlang einer durch zumindest zwei Achsen gebildeten Ebene mit einer im Wesentlichen konstanten Verfahrgeschwindigkeit zu verfahren, wenn der Aufnehmer das bloße Vorhandensein einer Bedienereinwirkung, unabhängig von deren tatsächlichen Höhe, erfasst. Auf diese Weise kann eine "digitale" Steuerung ermöglicht werden. Diese Verfahrsteuerung kann etwa im Kriechgang genutzt werden, um Referenzpunkte mit niedriger Verfahrgeschwindigkeit anzutasten. Es versteht sich, dass auch dann, wenn die (absolute) Höhe der Bedienereinwirkung (etwa der Handhabungskraft) nicht erfasst ist, die Richtung der Bedienereinwirkung erfasst und ausgewertet werden kann.

Gemäß einer weiteren Ausgestaltung, die alternativ oder zusätzlich implementiert sein kann, umfassen die Steuerungsbefehle eine Verfahrrichtung, die abhängig von einer Richtungskomponente der detektierten Handhabungskraft ist.

Die erfasste Richtung der Handhabungskraft kann genutzt werden, um eine gewünschte Richtung des Verfahrens des Spindelkopfes zu bestimmen. Demgemäß kann ein "schräges" Verfahren des Spindelkopfes ermöglicht werden, wenn etwa zwei Achsen (beispielsweise die X-Achse und die Z-Achse) koordiniert angesteuert und mit Steuerbefehlen versorgt werden.

Es kann ferner von Vorteil sein, wenn die Steuereinrichtung dazu ausgebildet ist, Steuerbefehle zum Verfahren des Spindelkopfes zu erzeugen, die von zumindest einem weiteren Einflussfaktor abhängig sind, insbesondere von einer Ist-Position des Spindelkopfes.

Hierbei kann es sich grundsätzlich etwa um ein AN-Signal oder ein AUS-Signal handeln. Auf diese Weise kann sichergestellt werden, dass unbeabsichtigte Einwirkungen auf die Handhabe nicht zu unerwünschten Bewegungen des Spindelkopfes führen. Weitere Funktionen sind denkbar. Beispielhaft kann der zumindest eine weitere Einflussfaktor ausgewertet werden, um zu bestimmen, ob der Spindelkopf in einem Schnellgang oder in einem Kriechgang zu verfahren ist.

Diese Maßnahme wird dadurch weitergebildet, dass die Steuereinrichtung dazu ausgebildet ist, die Verfahrgeschwindigkeit des Spindelkopfes anzupassen oder das Verfahren des Spindelkopfes zu stoppen, wenn der Spindelkopf beim Verfahren in einen definierten Bereich eindringt.

Der grundsätzlich mögliche Bewegungsbereich des Spindelkopfes, der etwa durch die Gestaltung der Führungen am Maschinenbett vorgegeben sein kann, kann in Bereiche unterteilt werden, in denen ein schnelles Verfahren des Spindelkopfes möglich ist, ferner in Bereiche, in denen ein langsames Verfahren möglich ist, und schließlich in Bereiche, in denen kein Verfahren des Spindelkopfes gewünscht ist.

Auf diese Weise kann etwa eine Kollisionsüberwachung erfolgen, um zu verhindern, dass der Spindelkopf beim manuell gesteuerten Verfahren mit Komponenten der Werkzeugmaschine kollidiert. Somit kann sich die Betriebssicherheit weiter erhöhen.

Bereiche, in denen keine Kollisionsgefahr droht, können grundsätzlich mit hoher Verfahrgeschwindigkeit verknüpft werden. Ferner ist es vorstellbar, Näherungsbereiche vorzusehen, die etwa Referenzpunkte oder eine bestimmte Werkstückgeometrie umhüllen. Die Näherungsbereiche können auch als Versatzbereiche aufgefasst werden. Beim Übergang des Spindelkopfes in einen Näherungsbereich kann die Steuereinrichtung derart auf den Verfahrantrieb einwirken, dass nur noch ein Kriechgang ermöglicht ist. Auf diese Weise kann der Bediener den Spindelkopf hochgenau verfahren, um etwa einen Referenzpunkt oder die Werkstückgeometrie anzutasten. In übrigen erlaubten Bewegungsbereichen kann der Spindelkopf hingegen mit hoher Verfahrgeschwindigkeit positioniert und bewegt werden. Insgesamt kann sich somit ein ausgezeichneter Kompromiss zwischen Positioniergenauigkeit und Positioniergeschwindigkeit ergeben.

Ferner können im (theoretisch möglichen) Bewegungsbereich sogenannte Stoppbereiche definiert sein, die etwa als Hülle um Maschinengeometrie verstanden werden können, und eine (virtuelle) Verfahrgrenze definieren. Auf diese Weise können unerwünschte Kollisionen des Spindelkopfes beim manuell gesteuerten Verfahren vermieden werden.

Beim Wechsel zwischen Bereichen, die einen Schnellgang erlauben, und Bereichen, die einen Kriechgang erfordern, kann zwischen korrespondierenden "Kennfeldern" zur Verknüpfung der erfassten Einwirkung auf die Handhabe und der Verfahrgeschwindigkeit gewechselt werden.

Die Bestimmung der jeweiligen Bereiche, also etwa die Unterteilung in erlaubten Bewegungsbereich, Näherungsbereich und Stoppbereich, kann in verschiedener Weise erfolgen. Beispielhaft können Rohdaten zur Werkstückgeometrie und Solldaten zur Geometrie der Werkzeugmaschine genutzt werden, um die umhüllenden Näherungsbereiche und Stoppbereiche zumindest annähernd zu bestimmen. Vorzugsweise weisen die Näherungsbereiche und die Stoppbereiche einen Versatz zu den zugrundeliegenden Elementen auf. Auf diese Weise kann eine grobe Erfassung von Soll-Lagen sowie einer Ist-Lage des Spindelkopfes eine hinreichende Genauigkeit der Grobbewegung und verbesserte Kollisionssicherheit mit sich bringen.

Gemäß einem weiteren Aspekt der Werkzeugmaschine ist die Handhabe als Bediengriff ausgebildet, wobei die Handhabe einen Detektionsbereich aufweist, der elastisch verformbar ist und insbesondere eine hohe Steifigkeit aufweist, und wobei der zumindest eine Aufnehmer im Detektionsbereich appliziert ist.

Mit anderen Worten kann es bevorzugt sein, die Handhabe im Wesentlichen steif auszuführen und starr am Spindelkopf (etwa an einem Gehäuse des Spindelkopfes) zu befestigen. Nahezu unmerkliche elastische Verformungen können mit dem zumindest einen Aufnehmer erfasst werden und zur Steuerung des Verfahrvorgangs des Spindelkopfes ausgewertet werden.

Somit kann die Handhabe als solches nur äußerst geringe Auslenkungen vollziehen. Dies hat den Vorteil, dass die sich durch das eigentliche Verfahren des Spindelkopfes ergebenden Rückmeldungen durch den Bediener nahezu ungefiltert und direkt spürbar bzw. erkennbar sind. Es erfolgt keine "Dämpfung", welche etwa bei beträchtlich verformbaren Handhaben auftreten würde. Auch wenn der Bediener lediglich "mittelbar" auf den Spindelkopf zu dessen Verlagerung einwirkt, kann sich ein umso deutlicherer Eindruck einer "direkten" Einwirkung ergeben.

Der Detektionsbereich der Handhabe kann etwa aus einem Werkstoff mit einem hohen Elastizitätsmodul gebildet sein. Ferner kann der Detektionsbereich der Handhabe einen ausreichenden Querschnitt aufweisen, um genügend steif zu sein. Auch bei einer beträchtlichen Steifigkeit können sich durch die Bedienereinwirkung zumindest kleinste Verformungen ergeben, die durch den Aufnehmer erfassbar oder detektierbar sind.

Abhängig von der Art der beim zumindest einen Aufnehmer verbauten Sensoren kann bereits eine Oberflächendehnung im Bereich von etwa 100 bis ungefähr 2000 µm/m genügen, um ein eindeutiges Signal zu erzeugen. Diese Werte entsprechen etwa einer relativen Dehnung (Epsilon) von ungefähr ε = 0,0001 bis 0,002. Es versteht sich, dass die genannten Werte von der Wahl des zu verwendenden Sensors abhängig sein können und grundsätzlich auch von den genannten Bereichen abweichen können. Die genannten minimalen relativen Dehnungen gestatten es, auch bei elastischen Verformungen, die der Bediener regelmäßig nicht bemerken wird, die Bedienereinwirkungen auf die Handhabe sicher und hinreichend genau zu erfassen.

Gemäß einer weiteren Ausgestaltung ist es von Vorteil, wenn der Handhabe ein Aktivierungsschalter zugeordnet ist. Der Aktivierungsschalter kann auch als Zustimm-Schalter bezeichnet werden und etwa in Form einer Zustimm-Taste ausgebildet sein.

Der Aktivierungsschalter kann genutzt werden, um das Verfahren des Spindelkopfes in Abhängigkeit von den erfolgten Einwirkungen durch den Bediener selektiv freizugeben oder zu unterbinden.

Beispielhaft ist es vorstellbar, den Aktivierungsschalter derart zu gestalten, dass dieser beim Verfahren andauernd betätigt sein muss, um ein manuell gesteuertes Verfahren des Spindelkopfes zu erlauben. Eine solche Gestaltung ist bevorzugt und kann dazu beitragen, Fehlbedienungen und damit verbundene Schäden an der Werkzeugmaschine oder am Werkstück sicher zu vermieden. Ebenso ist es vorstellbar, den Aktivierungsschalter zu Beginn des manuell gesteuerten Verfahrvorgangs einmalig zu betätigen, um eine Freigabe zu erlangen.

Der Aktivierungsschalter kann beispielhaft direkt an der Handhabe aufgenommen sein. Auf diese Weise kann etwa eine Einhandbedienung ermöglicht werden. Es ist jedoch ebenso vorstellbar, den Aktivierungsschalter getrennt von der Handhabe, beispielhaft am Spindelkopf oder gestellfest an einer anderen Komponente der Werkzeugmaschine, anzuordnen. Auf diese Weise kann eine Zweihandbedienung ermöglicht werden.

Gemäß einer weiteren Ausgestaltung ist die Steuereinrichtung ferner dazu ausgebildet, abhängig von zumindest einem Einflussfaktor eine selektive taktile Rückmeldung an der Handhabe zu erzeugen.

Eine taktile Rückmeldung an den Bediener kann sich etwa durch eine an der Handhabe spürbare Vibration ergeben. Der Einflussfaktor kann beispielhaft eine Ist-Position, Ist-Geschwindigkeit, Ist-Handhabungskraft oder eine Kombination daraus umfassen. Andere Einflussfaktoren sind denkbar, etwa das Überschreiten bestimmter Bewegungsbereiche.

Gemäß einer Weiterbildung dieser Ausgestaltung wird die taktile Rückmeldung durch zumindest einen Vibrationsgeber, der an der Handhabe angebracht ist, oder durch einen Bewegungsimpuls im Verfahrantrieb des Spindelkopfes erzeugt.

Der Vibrationsgeber kann beispielhaft durch einen Vibrationsmotor gebildet sein. Ebenso ist es vorstellbar, den Verfahrantrieb derart anzusteuern, dass sich für den Bediener, der an der Handhabe angreift, ein spürbares Rückeln oder Schütteln ergibt. Hierzu kann der Verfahrantrieb des Spindelkopfes beispielhaft mit einem Oszillationsimpuls angesteuert werden.

Die taktile Rückmeldung kann etwa dann erzeugt werden, wenn der Spindelkopf vom erlaubten Verfahrbereich ausgehend in den Näherungsbereich übertritt oder den Stoppbereich tangiert. Auf diese Weise kann dem Bediener etwa eindeutig klar gemacht werden, dass die angestrebte Bewegung (in den Stoppbereich hinein) nicht erlaubt ist. Beim Übergang in den Annäherungsbereich kann dem Bediener mittels der taktilen Rückmeldung eindeutig mitgeteilt werden, dass der Spindelkopf nunmehr im Kriechgang verfahren wird.

Es sind weitere Ereignisse denkbar, die eine selektive taktile Rückmeldung an der Handhabe auslösen können. Beispielhaft kann auf diese Weise ein Überschreiten oder Unterschreiten bestimmter Wertebereiche signalisiert werden. Dies kann etwa die Handhabungskraft, den Verfahrweg, die Verfahrgeschwindigkeit oder Ähnliches betreffen. Eine Kollisionsüberwachung kann etwa auch durch eine Erfassung von Kräften oder Momenten in Antrieben erfolgen, die für die Verfahrbewegung genutzt werden. Ein plötzlicher Kraftanstieg oder Momentenanstieg bei einem Antriebsmotor kann als Indikator für eine erfolgte Kollision gewertet werden. Auch ein solches Ereignis kann dem Bediener mittels einer taktilen Rückmeldung mitgeteilt werden.

Gemäß einer weiteren Gestaltung ist es vorgesehen, beim Verfahren des Spindelkopfes die Antriebsleistung der Antriebe oder die Verfahrgeschwindigkeit soweit zu reduzieren, dass ein Verfahren zwar noch möglich ist, jedoch bei einer Kollision des Schleifkopfes keine übermäßigen Kräfte oder Stöße zu erwarten sind. Auf diese Weise lässt sich ein guter Kompromiss zwischen einem möglichst großen (erlaubten) Bewegungsbereich, einer hohen Verfahrflexibilität sowie einer möglichst hohen Maschinensicherheit verwirklichen. Vorzugsweise ist diese Gestaltung mit einer genauen Überwachung von Kräften, Momenten oder hierzu korrespondierenden Größen verbunden, um Kollisionen möglichst schnell detektieren zu können und die beteiligten Antriebe entsprechend zügig stoppen zu können. Bei dieser Gestaltung ist es folglich nicht zwingend erforderlich, im Vorhinein erlaubte oder verbotene Bewegungsbereiche zu definieren. Der Bedien- und Einrichtaufwand kann deutlich reduziert werden.

Die Aufgabe der Erfindung wird ferner gelöst durch ein Verfahren zum Positionieren eines Spindelkopfes einer Werkzeugmaschine zur Bearbeitung von Werkstücken, insbesondere einer Schleifmaschine, in zumindest einem Betriebsmodus, mit den folgenden Schritten:
- Erfassen von Einwirkungen auf eine Handhabe, wobei die Handhabe am Spindelkopf angebracht ist, und wobei die Einwirkungen zumindest eine Richtungsinformation oder eine Kraftinformation aufweisen,
- Erzeugen von Steuerungsbefehlen zur Ansteuerung eines Verfahrantriebs unter Berücksichtigung von Bewegungsparametern, die abhängig von den erfassten Einwirkungen gewählt werden, und
- Verfahren des Spindelkopfes mit dem Verfahrantrieb unter Berücksichtigung der Steuerbefehle, wobei der Verfahrantrieb dazu ausgebildet ist, den Spindelkopf relativ zu einer Werkstückaufnahme definiert motorisch zu verfahren.

Auch auf diese Weise wird die Aufgabe der Erfindung gelöst.

Das Verfahren kann durch zumindest einen der folgenden Schritte weitergebildet sein:
- Überwachen einer Ist-Position des Spindelkopfes,
- Erzeugen einer taktilen Rückmeldung an der Handhabe, und
- Anpassen einer Verfahrgeschwindigkeit oder Stoppen des Verfahrens des Spindelkopfes, wenn der Spindelkopf beim Verfahren in einen definierten Bereich eindringt.

Das Verfahren kann insbesondere mit einer Werkzeugmaschine nach einem der vorgenannten Aspekte durchgeführt werden. Es versteht sich, dass auch das Verfahren gemäß einem oder mehreren Aspekten der vorgenannten Werkzeugmaschine weitergebildet sein kann.

Das Verfahren erlaubt in einfacher Weise ein manuell gesteuertes Positionieren und Verfahren des Spindelkopfes einer Werkzeugmaschine, bei dem der Bediener trotz lediglich mittelbarer Einwirkung den Spindelkopf instinktiv und intuitiv verfahren und positionieren kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung und Erläuterung mehrerer bevorzugter Ausführungsbeispiele unter Bezugnahme auf die Zeichnungen. Es zeigen:
- Fig. 1: eine perspektivische Ansicht einer als Schleifmaschine ausgebildeten Werkzeugmaschine mit einer Einhausung;
- Fig. 2: eine Draufsicht einer Werkzeugmaschine;
- Fig. 3: eine perspektivische Ansicht einer Werkstückaufnahme und eines Spindelkopfes einer Werkzeugmaschine, wobei der Spindelkopf mit einer Handhabe zur Betätigung versehen ist;
- Fig. 4a, 4b und 4c: perspektivische Ansichten verschiedener Handhaben, mit denen auf einen Spindelkopf eingewirkt werden kann;
- Fig. 5: eine vereinfachte perspektivische Darstellung einer weiteren Handhabe, die einen Aufnehmer mit einer Mehrzahl von Sensoren aufweist;
- Fig. 6: eine vereinfachte seitliche Ansicht eines Schafts einer Handhabe, der mit einer Aufnahme mit einer Mehrzahl von Sensoren gekoppelt ist;
- Fig. 7: eine vereinfachte Draufsicht einer Werkzeugmaschine mit einem Spindelkopf, der verschiedene Soll-Lagen einnimmt;
- Fig. 8: eine weitere vereinfachte perspektivische Darstellung einer gegenüber der Darstellung in Fig. 5 abgewandelten Handhabe; und
- Fig. 9: ein schematisches vereinfachtes Flussdiagramm eines beispielhaften Verfahrens zum Positionieren eines Spindelkopfes einer Werkzeugmaschine.

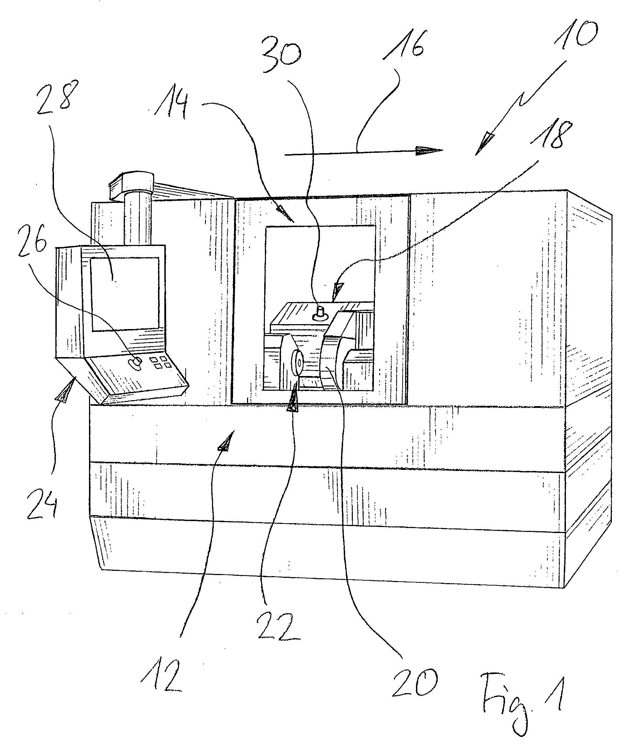

In Fig. 1 ist eine Werkzeugmaschine perspektivisch dargestellt und insgesamt mit 10 bezeichnet.

Die Werkzeugmaschine 10 ist vorliegend als Schleifmaschine ausgebildet, insbesondere als Rundschleifmaschine. Die Werkzeugmaschine 10 weist eine Einhausung 12 auf, die als Gehäuse fungiert. Die Einhausung 12 weist eine Öffnung auf, die bei der in Fig. 1 gezeigten Gestaltung etwa durch eine Schutztür 14 verschließbar ist. Die Schutztür 14 kann beispielhaft eine Fensteröffnung aufweisen, durch die ein Innen-raum der Werkzeugmaschine 10 von außen sichtbar ist. Die Einhausung 12 und die Schutztür 14 erlauben insbesondere bei automatisierten Bearbeitungsvorgängen eine sichere Abgrenzung des Innenraums der Werkzeugmaschine 10. Auf diese Weise kann eine grundsätzlich von beweglichen Komponenten ausgehende Gefahr minimiert werden. Ferner kann etwa ein unerwünschter Austritt von Schmiermittel, Kühlflüssigkeit oder von Spänen in die Umgebung unterbunden werden.

Bei besonderen Betriebsmodi ist es erforderlich, die Schutztür 14 zu öffnen, um den Innenraum der Werkzeugmaschine 10 durch einen Bediener von außen erreichbar zu machen. Zu diesem Zweck kann die Schutztür 14 beispielhaft seitlich verschoben bzw. verschwenkt werden, um eine zuvor verschlossene Öffnung freizugeben. Ein mit 16 bezeichneter Pfeil veranschaulicht eine mögliche Öffnungsbewegung der Schutztür 14.

Betriebsmodi, die einen Zugang des Innenraums der Werkzeugmaschine 10 erforderlich machen, können etwa Rüstvorgänge, Einrichtvorgänge, Abrichtvorgänge oder allgemein Werkzeugwechsel- bzw. Werkstückwechselvorgänge umfassen. Es versteht sich, dass abhängig vom Automatisierungsgrad der Werkzeugmaschine 10 verschiedene Betriebsmodi einen (manuellen) Zugang von außen erforderlich machen können.

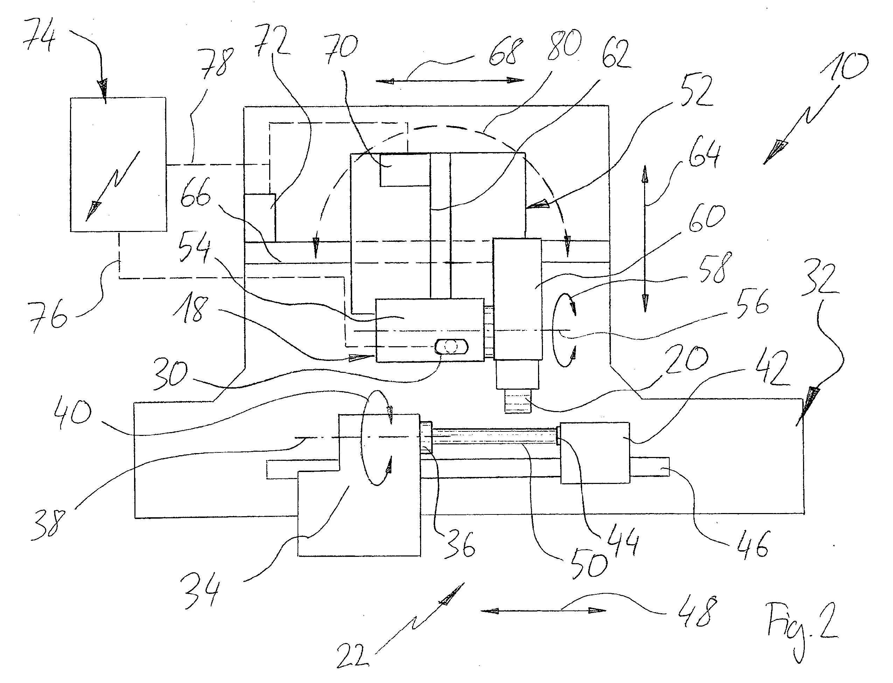

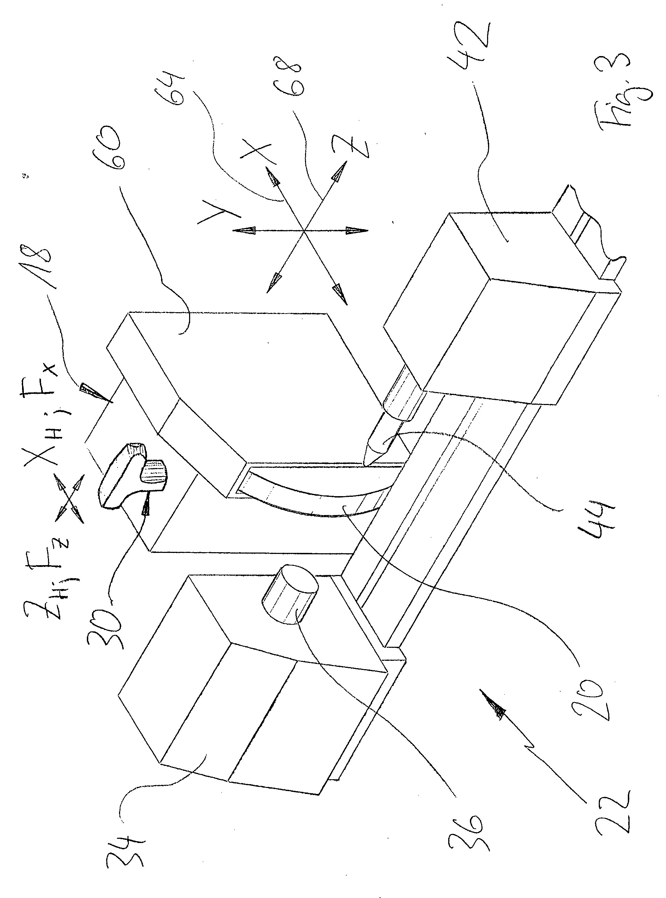

In Fig. 1 ist ferner im Innenraum der Werkzeugmaschine 10 ein Spindelkopf angedeutet, der mit 18 bezeichnet ist. Am Spindelkopf 18 ist ein Werkzeug 20 aufgenommen, vgl. auch Fig. 2 und Fig. 3. Bei dem Werkzeug 20 kann es sich insbesondere um ein Schleifwerkzeug, vorzugsweise um eine Schleifscheibe handeln.

Die Werkzeugmaschine 10 weist ferner eine Werkstückaufnahme 22 auf, die zur Aufnahme eines Werkstücks (in Fig. 1 nicht dargestellt) ausgebildet ist. Zur Bearbeitung des Werkstücks kann der Spindelkopf 14 mit dem daran aufgenommenen Werkzeug 20 relativ zur Werkstückaufnahme 22 verfahren werden.

Werkzeugmaschinen 10, insbesondere Schleifmaschinen, weisen üblicherweise eine Bedienerschnittstelle 24 auf, die außerhalb des Innenraums der Werkzeugmaschine 10 angeordnet ist. Auf diese Weise kann ein Bediener die Werkzeugmaschine 10 steuern, programmieren, regeln oder etwa Diagnosen durchführen, ohne mit dem Innenraum der Werkzeugmaschine 10 in Kontakt zu kommen. Bei der Bedienerschnittstelle 24 kann es sich etwa um eine Bedieneinheit handeln, die zumindest eine Eingabeeinheit 26 und zumindest eine Ausgabeeinheit 28 aufweist. Die Eingabeeinheit 26 kann etwa eine Tastatur, Drucktaster, Stellhebel oder Ähnliches aufweisen. Die Eingabeeinheit 26 kann jedoch auch berührungsempfindliche Flächen aufweisen. Bei der Ausgabeeinheit 28 handelt es sich üblicherweise um einen Bildschirm, ferner um alphanumerische Anzeigen, Kontrollleuchten, Skalen oder Ähnliches. Insbesondere dann, wenn etwa ein Bildschirm berührungsempfindlich gestaltet ist, können die Eingabeeinheit 26 und die Ausgabeeinheit 28 zumindest teilweise durch identische Bauteile verwirklicht sein.

Die Bedienerschnittstelle 24 kann eine komfortable Programmierung der Werkzeugmaschine 10 erlauben. Es ist grundsätzlich auch vorstellbar, in einem Betriebsmodus, bei dem etwa der Spindelkopf 18 relativ zur Werkstückaufnahme 22 zu verfahren ist, den Spindelkopf 18 durch Eingaben an der Eingabeeinheit 26 manuell gesteuert zu verfahren. Hierzu eignen sich etwa Stellhebel oder Stelltaster, die eine Bewegung oder ein Bewegungsinkrement in zugeordneten Richtungen bestimmen. Ferner kann eine Bewegung oder ein Verfahren des Spindelkopfes 18 etwa mittels Handrädern oder dergleichen eingeleitet werden. Wie eingangs erwähnt, muss der Bediener jedoch bei dieser Art manueller Positionierung des Spindelkopfes 18 nach Möglichkeit sowohl den Spindelkopf 18 als auch die Bedienerschnittstelle 24 im Auge behalten. Dieses kann zu Unsicherheiten oder gar zu Fehlbedienungen führen.

Zur Vermeidung derartiger Nachteile weist der Spindelkopf 18 der Werkzeugmaschine 10 gemäß Fig. 1 eine Handhabe 30 auf, die unmittelbar (also etwa direkt) an diesem aufgenommen ist. Die Handhabe 30 ist gemeinsam mit dem Spindelkopf 18 verfahrbar.

Fig. 2 zeigt eine vereinfachte schematische Draufsicht einer Werkzeugmaschine, die grundsätzlich der Werkzeugmaschine 10 gemäß Fig. 1 entsprechen oder zumindest ähnlich sein kann. Aus Veranschaulichungsgründen weist die in Fig. 2 gezeigte Ausgestaltung keine Einhausung 12 sowie keine Bedienerschnittstelle 24 auf.

Die Werkzeugmaschine 10 weist ein Maschinenbett (oder Maschinentisch) 32 auf (in Fig. 1 durch die Einhausung 12 verdeckt). Am Maschinenbett 32 ist die Werkstückaufnahme 22 aufgenommen. Die Werkstückaufnahme 22 weist beispielhaft eine Werkstückspindel 34 auf, die mit einer Spanneinrichtung (oder Spitze) 36 versehen ist. Die Spanneinrichtung 36 kann grundsätzlich durch eine (Zentrier)Spitze und/oder ein Spannfutter, Spannbacken oder Ähnliches implementiert sein. Die Werkstückspindel 34 kann ferner einen Spindelantrieb aufweisen, der es erlaubt, die Spanneinrichtung 36 definiert um eine Achse 38 zu verdrehen, vgl. einen mit 40 bezeichneten Pfeil.

Die Werkstückaufnahme 22 weist ferner einen Reitstock 42 auf, der analog zur Werkstückspindel 34 mit einer Spanneinrichtung (oder Spitze) 44 versehen sein kann. Zwischen der Werkstückspindel 34 und dem Reitstock 42 ist ein Werkstück 50 aufgenommen. Dabei kann es sich etwa um einen Stab oder eine Welle handeln. Das Werkstück 50 kann grundsätzlich auch allein durch die Werkstückspindel 34 geführt und gehalten sein, ohne dass der Reitstock 42 erforderlich wäre. Insbesondere bei Werkstücken 50 mit hohem Längen-Durchmesser-Verhältnis kann sich jedoch eine zweiseitige Aufnahme mittels der Werkstückspindel 34 und dem Reitstock 42 empfehlen. Übermäßig lange Werkstücke 50 können ferner zusätzlich durch Rollen oder Auflager geführt und abgestützt werden (in Fig. 2 nicht dargestellt). Die Werkstückspindel 34 und der Reitstock 42 können an einer Führung 46 am Maschinenbett 32 aufgenommen und geführt sein. Es ist vorstellbar, die Werkstückspindel 34 bzw. den Reitstock 42 mit einem Linearantrieb zu versehen, um diese entlang der Führung 46 definiert und kontrolliert zu verfahren, vgl. einen mit 48 bezeichneten Doppelpfeil.

Der bei der Werkstückspindel 34 fakultativ vorgesehene Antrieb kann etwa derart ausgelegt und gesteuert sein, dass das Werkstück 50 hochgenau um die Achse 38 verdreht werden kann. Die Achse 38 kann etwa auch als C-Achse bezeichnet werden. Eine sogenannte C-Achsen-Bearbeitung erlaubt die Bearbeitung unrunder Werkstücke 50. Zu diesem Zweck kann die Werkzeugmaschine 10 über geeignete Steuerungs- und Regelungsorgane verfügen, um das Werkzeug 50 definiert um die Achse 38 zu verdrehen und gleichzeitig das Werkzeug 20 auf das Werkstück 50 zuzustellen bzw. von diesem weg zu bewegen. Auf diese Weise können etwa Nockenwellen, Kurbelwellen oder Ähnliches bearbeitet werden.

Am Maschinenbett 32 ist ferner ein Werkzeugtisch 52 aufgenommen, der etwa auch als Kreuztisch bezeichnet werden kann. Der Spindelkopf 18 ist am Werkzeugtisch 52 aufgenommen, der etwa als Kreuztisch ausgebildet sein kann. Der Spindelkopf 18 weist beispielhaft einen Werkzeugantrieb 54 auf, der dazu ausgebildet ist, das Werkzeug 20 um eine Spindelachse 56 zu rotieren, vgl. einen mit 58 bezeichneten Pfeil. Insbesondere dann, wenn das Werkzeug 20 als Schleifscheibe ausgebildet ist, kann am Spindelkopf 18 ferner eine Schutzhaube 60 aufgenommen sein, die Bereiche des Werkzeugs 20 abdeckt. Auf diese Weise können etwa Abrieb des Werkzeugs 20 sowie Späne des Werkstücks 50 definiert geführt und abgeleitet werden. Eine Verschmutzungsneigung der Werkzeugmaschine 10 kann reduziert werden.

Am Maschinenbett 32 bzw. am Werkzeugtisch 52 können Führungen 62, 66 ausgebildet sein, an denen schlussendlich der Spindelkopf 18 gelagert sein kann. Beispielhaft kann die Führung 62 eine Führung in einer X-Richtung bereitstellen. Die Führung 66 kann eine Führung in einer Z-Richtung bereitstellen. Ein damit korrespondierendes Koordinatensystem X-Y-Z ist beispielhaft in Fig. 3 dargestellt.

Gemäß der in Fig. 2 gezeigten beispielhaften Ausgestaltung kann der Werkzeugtisch 52 entlang der Führung 66 in Z-Richtung verfahren werden, vgl. auch einen mit 68 bezeichneten Pfeil. Der Spindelkopf 18 kann entlang der Führung 62 in X-Richtung verfahren werden, vgl. einen mit 64 bezeichneten Pfeil. Es versteht sich, dass die Zuordnung der Achsen X-Y-Z zum Maschinenbett 32, dem Werkzeugtisch 62 und dem Spindelkopf 18 auch in anderer Weise und Orientierung geschehen kann. Andere Arten von Koordinatensystemen sind denkbar, etwa Polarkoordinatensysteme oder Kugelkoordinatensysteme.

Der Spindelkopf 18 kann beispielhaft entlang der X-Achse (Pfeil 64) sowie entlang der Z-Achse (Pfeil 68) verfahren werden. Hierzu ist bei der Werkzeugmaschine 10 ein Verfahrantrieb vorgesehen, der beispielsweise einen Antrieb 70 und einen Antrieb 72 umfassen kann. Der Antrieb 70 ist beispielhaft dazu ausgebildet, den Spindelkopf 18 entlang der X-Achse zu verfahren. Der Antrieb 72 ist beispielhaft dazu ausgebildet, den Werkzeugtisch 52 und somit mittelbar den Spindelkopf 18 entlang der Z-Achse zu verfahren. Der Verfahrantrieb kann grundsätzlich als verteilter Antrieb mit einzelnen Antrieben 70, 72, ebenso jedoch auch als integrierter Antrieb ausgestaltet sein.

Die Werkzeugmaschine 10 weist ferner eine mit 74 bezeichnete Steuereinrichtung auf, die etwa zur Steuerung von Verfahrbewegungen des Spindelkopfes 18 relativ zur Werkstückaufnahme 22 ausgebildet ist. Zu diesem Zweck kann die Steuereinrichtung 74 etwa über Steuerleitungen 78 auf die Antriebe 70, 72 einwirken. Die notwendigen Steuerbefehle können etwa durch ein Maschinensteuerungsprogramm erzeugt und abgearbeitet werden. Auf diese Weise kann etwa eine automatisierte Bearbeitung des Werkstücks 50 erfolgen.

Wie vorstehend bereits erwähnt, ist am Spindelkopf 18 ferner eine Handhabe 30 aufgenommen, die ebenso mit der Steuereinrichtung 74 gekoppelt ist. Die Handhabe 30 ist durch eine Signalleitung 76 mit der Steuereinrichtung 74 verbunden. Die Handhabe 30 sowie deren besondere Kopplung mit der Steuereinrichtung 74 erlauben es dem Bediener, durch manuelles Einwirken auf die Handhabe 30 den Spindelkopf 18 entlang der Führungen 62, 66 definiert und kontrolliert zu verfahren. Dies erfolgt jedoch etwa nicht durch eine vom Bediener selbst aufgebrachte Kraft, sondern vielmehr durch definierte Ansteuerung des Verfahrantriebs (etwa der Antriebe 70, 72). Der Bediener kann auf die Handhabe 30 einwirken. Bedienereinwirkungen, etwa eine Bedienerkraft, können erfasst und der Steuereinrichtung 74 zugeführt werden. Die Steuereinrichtung 74 ist dazu ausgebildet, erfasste Einwirkungen zu verarbeiten und abhängig davon den Verfahrantrieb anzusteuern.

Bei dem Bediener kann sich der Eindruck ergeben, den Spindelkopf 18 selbsttätig und unmittelbar zu verfahren. Dies wird durch die "Übersetzung" der Einwirkungen auf die Handhabe 30 in Steuerbefehle für das motorische Verfahren der Werkzeugspindel 18 erzielt.

So ist es vorstellbar, die Steuerbefehle etwa derart zu erzeugen, dass eine Einwirkung mit hoher Kraft zu einer schnelleren Bewegung des Spindelkopfes 18 als eine Einwirkung mit niedriger Kraft führt. Eine Erfassung der Richtung, in der der Bediener auf die Handhabe 30 einwirkt, kann in einen Steuerbefehl überführt werden, der eine damit korrespondierende Richtungsinformation für die Bewegung des Spindelkopfes 18 aufweist.

In Fig. 2 ist ferner ein mit 80 bezeichneter gestrichelter Doppelpfeil gezeigt. Der Pfeil 80 deutet an, dass der Spindelkopf 18 auch grundsätzlich definiert um eine Achse verschwenkbar gestaltet sein kann, die etwa senkrecht zur durch die X-Achse und die Z-Achse (Pfeile 64, 68) definierten Ebene ist. Eine derartige Achse kann auch als B-Achse bezeichnet werden. Die B-Achse kann grundsätzlich parallel zur Y-Achse orientiert sein, vgl. Fig. 3. Ein definiertes Verschwenken bzw. Verdrehen des Spindelkopfes 18 um diese Achse kann etwa ein schräges Anstellen des Werkzeugs 20 relativ zum Werkstück 50 erlauben. Ebenso ist es denkbar, mittels einer derartigen Bewegung ein weiteres Werkzeug 20 einzuschwenken, um dieses mit dem Werkstück 50 in Eingriff zu bringen.

Auch die Bewegung (Verdrehung, Verschwenkung) um die B-Achse kann grundsätzlich durch eine korrespondierende Einwirkung auf die Handhabe 30 veranlasst werden. Hierzu kann die Handhabe 30 etwa verdreht bzw. torpediert werden.

Fig. 3 zeigt eine perspektivische Darstellung eines Ausschnitts etwa der Werkzeugmaschine 10 gemäß Fig. 2, wobei aus Veranschaulichungsgründen auf eine Darstellung des Maschinenbetts 32, des Werkzeugtisches 52, des Werkstücks 50, der Steuereinrichtung 74 sowie weiterer Komponenten verzichtet wurde.Wie vorstehend bereits erwähnt, zeigt Fig. 3 ein mit X, Y und Z bezeichnetes (kartesisches) Koordinatensystem. Die dem Reitstock 42 zugeordnete Spanneinrichtung 44 ist beispielhaft als Spitze ausgebildet.

Der Spindelkopf 18 ist grundsätzlich in der X-Z-Ebene relativ zur Werkstückaufnahme 22 (bzw. einem daran aufgenommenen Werkstück 50) verfahrbar gestaltet. In einem Betriebsmodus der Werkzeugmaschine 10, der ein manuell gesteuertes Verfahren des Spindelkopfes 18 erlaubt, kann der Bediener in geeigneter Weise auf die Handhabe 30 einwirken, um das Verfahren oder Positionieren der Werkzeugspindel 18 zu veranlassen. Hierfür kann der Bediener beispielsweise in Raumrichtungen auf die Handhabe 30 einwirken, deren Richtungskomponenten grundsätzlich etwa den Achsen X bzw. Z zugeordnet werden können.

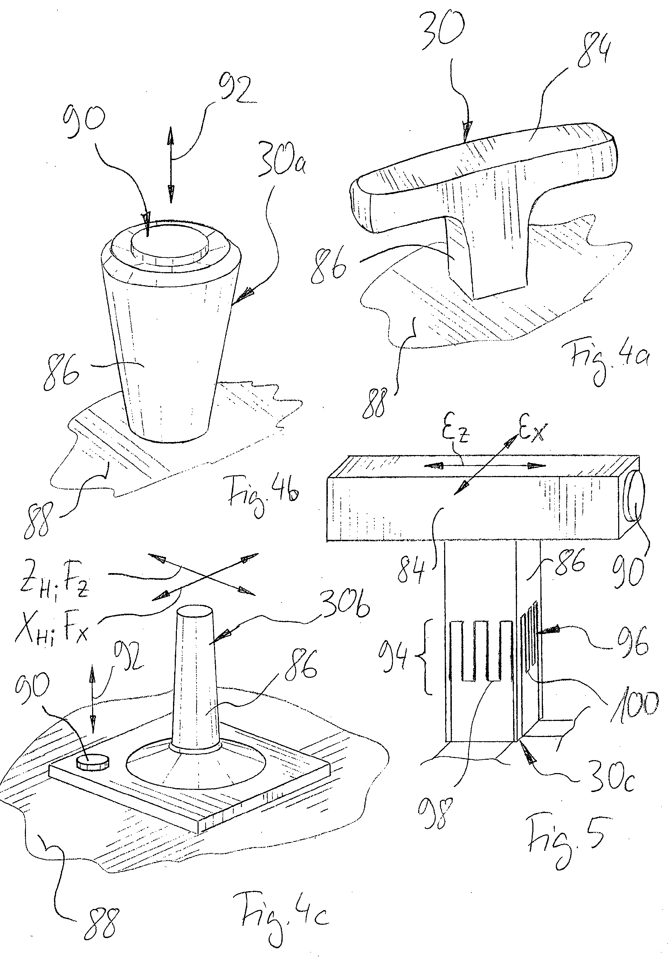

Beispielhaft kann eine Einwirkung (etwa Zug oder Druck) in einer Richtung X_{H} mit einer Bedienerkraft F_{X} einhergehen. Eine Einwirkung des Bedieners in einer Richtung Z_{H} kann mit einer Bedienerkraft F_{Z} einhergehen. Beispielhaft kann die Handhabe 30 mit zumindest einem Aufnehmer oder Messaufnehmer versehen sein (vgl. Fig. 5), der es erlaubt, Höhe und Richtung einer einwirkenden Kraft F zu erfassen. Die Kraft F kann in ihre Komponenten F_{X} und F_{Z} zerlegt werden. Auf diese Weise kann zumindest mittelbar eine Richtungsinformation sowie eine Handhabungskraftinformation gewonnen werden. Ausgehend von diesen Informationen kann die Steuereinrichtung den Verfahrantrieb derart ansteuern, dass der Spindelkopf 18 in der Richtung, die im Wesentlichen der Richtung der Einwirkung entspricht, verfahrbar ist. Eine sich dabei ergebende Verfahrgeschwindigkeit kann grundsätzlich von der Höhe der einwirkenden Kraft F abhängig gemacht werden.

In den Fig. 4a, 4b und 4c sind beispielhafte Gestaltungen von Handhaben 30, 30a, 30b perspektivisch dargestellt. Die in Fig. 4a gezeigte Handhabe 30 ist etwa als T-Griff ausgeführt. Die Handhabe 30 weist ein Querstück 84 sowie einen Schaft 86 auf. Der Bediener kann die Handhabe 30 am Querstück 84 greifen, um auf diese in gewünschter Weise einzuwirken. Die Handhabe 30 ist über den Schaft 86 vorzugsweise starr an einem Spindelkopfgehäuse 88 aufgenommen (in Fig. 4a nur ansatzweise dargestellt).

Die Handhabe 30a in Fig. 4b weist beispielhaft einen knaufförmigen oder konischen Schaft 86 auf, der insbesondere starr am Spindelkopfgehäuse 88 angebracht ist. Die Handhabe 30a weist kein Querstück 84 auf. An ihrem dem Spindelkopfgehäuse 88 abgewandten Ende weist die Handhabe 30a einen Aktivierungsschalter 90 auf, der durch den Bediener betätigbar ist, vgl. einen mit 92 bezeichneten Pfeil. Der Aktivierungsschalter 90 kann beispielsweise dazu dienen, eine Erfassung oder Verarbeitung von Bedienereinwirkungen auf die Handhabe 30a durch die Steuereinrichtung 74 freizugeben oder zu unterbinden. Auf diese Weise kann vermieden werden, dass unbeabsichtigte Einwirkungen auf die Handhabe 30a zu einem unbeabsichtigten Verfahren oder Positionieren des Spindelkopfes 18 führen. Bei der in Fig. 4b gezeigten Ausgestaltung kann der Bediener die Handhabe 30a mit einer Hand ergreifen und gleichzeitig mit dieser Hand den Aktivierungsschalter 90 betätigen. Somit kann eine Einhandbedienung ermöglicht sein.

In Abwandlung von der in Fig. 4b gezeigten Handhabe 30a ist die Handhabe 30b in Fig. 4c mit einem Aktivierungsschalter 90 gekoppelt, der nicht unmittelbar an der Handhabe 30b bzw. an deren Schaft 86 angeordnet ist. Es versteht sich, dass der Aktivierungsschalter 90 grundsätzlich auch weiter entfernt von der Handhabe 30b oder dem Spindelkopf 18 an der Werkzeugmaschine 10 angeordnet sein kann. Ein entfernt angeordneter Aktivierungsschalter 90 erlaubt eine Zweihandbedienung.

In Fig. 4c sind ferner Doppelpfeile X_{H}, Z_{H} dargestellt, die etwa parallel zu den Achsen X, Z des Koordinatensystems X, Y, Z gemäß Fig. 3 orientiert sein können. Den Pfeilen bzw. Richtungen X_{H} und Z_{H} sind die Kraftkomponenten bzw. Richtungskräfte F_{X} und F_{Z} zugeordnet. Somit kann der Bediener in gewünschter Weise und Richtung auf die Handhabe 30b einwirken, um ein Verfahren des Spindelkopfes 18 in der gewünschten Richtung zu veranlassen.

Die Erfassung von Bedienereinwirkungen wird anhand der in Fig. 5 gezeigten Darstellung einer Handhabe 30c erläutert. Die Handhabe 30c ist beispielhaft T-förmig ausgebildet und weist ein Querstück 84 sowie einen Schaft 86 auf. Die Handhabe 30c kann ferner einen Aktivierungsschalter 90 aufweisen, der beispielhaft seitlich am Querstück 84 angebracht ist. Die Handhabe 30c weist ferner einen Detektionsbereich 94 auf, in dem ein Aufnehmer 96 an den Schaft 86 appliziert ist. Der Aufnehmer 96 weist beispielhaft eine Mehrzahl von Sensoren 98, 100 auf. Die Sensoren 98, 100 sind an verschiedenen Seiten des Schafts 86 angeordnet. Beispielhaft ist der Sensor 98 dazu ausgebildet, Verformungen des Detektionsbereiches 94 der Handhabe 30c in der X-Richtung zu erfassen, vgl. einen mit ε_{X} bezeichneten Pfeil. Analog dazu kann der Sensor 100 dazu ausgebildet sein, Verformungen des Detektionsbereiches 94 der Handhabe 30c in der Z-Richtung zu erfassen, vgl. einen mit ε_{Z} bezeichneten Pfeil.

Auf diese Weise können die Komponenten der Handhabungskraft F_{X}, F_{Z} mittelbar erfasst werden. Es versteht sich, dass bei der in Fig. 5 gezeigten Ausgestaltung der Handhabe 30c dem Sensor 98 sowie dem Sensor 100 grundsätzlich an der jeweils gegenüberliegenden Seite des Schafts 86 (in Fig. 5 nicht dargestellt) jeweils ein weiterer korrespondierender Sensor zugeordnet sein kann.

Wie vorstehend bereits erwähnt, kann es sich bei den Sensoren 98, 100 beispielhaft um Dehnmessstreifen, piezostriktive Sensoren, kapazitive Sensoren, optische Sensoren oder ähnliche Sensoren handeln. Die Sensoren 98, 100 können dazu ausgebildet sein, eine Einwirkung, insbesondere eine Kraft auf die Handhabe 30c mittelbar oder unmittelbar zu erfassen. Der Detektionsbereich 94 ist grundsätzlich elastisch verformbar, weist jedoch eine hohe Steifigkeit auf. Für den Bediener nicht bemerkbare Verformungen des Detektionsbereiches 94 können durch den Aufnehmer 96 mit den Sensoren 98, 100 erfasst und der Steuereinrichtung 74 zugeführt werden. Die Steuereinrichtung 74 kann richtungsabhängig und abhängig von einer erfassten (absoluten oder relativen) Größe der einwirkenden Kraft F Steuerbefehle erzeugen und an den Verfahrantrieb des Spindelkopfes 18 übermitteln, um diesen in gewünschter Weise zu verfahren.

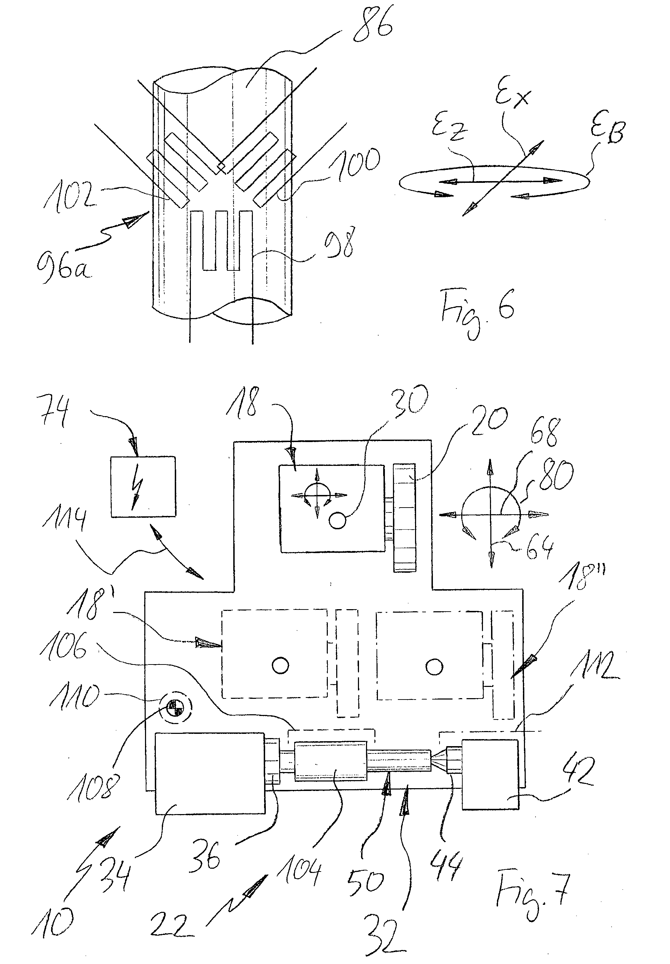

Fig. 6 zeigt in stark vereinfachter Weise eine gebrochene Darstellung eines Schaftes 86, der etwa dem Schaft 86 der Handhabe 30b gemäß Fig. 4c entsprechen kann. Am Schaft 86 ist ein Aufnehmer 96a angeordnet, der eine Mehrzahl von Sensoren 98, 100, 102 aufweist. Die Sensoren 98, 100, 102 sind beispielhaft rosettenförmig angeordnet. Eine derartige Gestaltung kann es erlauben, neben den Verformungen, die im Wesentlichen entlang linearer Achsen erfolgen, ebenso auch Torsionsdehnungen oder Torsionsverformungen zu erfassen. Beispielhaft beschreiben die mit ε_{X} und ε_{Z} bezeichneten Doppelpfeile Verformungen in der X-Richtung bzw. der Z-Richtung. Ferner kann mit einer rosettenförmigen Gestaltung der Sensoren 98, 100, 102 jedoch auch eine Verdrehung bzw. Torsion des Schaftes 86 detektiert werden, vgl. einen mit ε_{B} bezeichneten Pfeil. Auf diese Weise kann etwa ein gewünschtes Verschwenken oder Verdrehen des Spindelkopfes 18 um die sogenannte B-Achse gesteuert werden, vgl. den Pfeil 80 in Fig. 2. Es versteht sich, dass auch andere Zuordnungen zwischen einer Mehrzahl von Sensoren des zumindest einen Aufnehmers 98a eine Erfassung von linearen Verformungen und Torsionsverformungen entlang und um verschiedene Achsen erlauben kann.

Fig. 7 zeigt eine stark vereinfachte Draufsicht auf eine Werkzeugmaschine, deren Gestaltung etwa der Werkzeugmaschine 10 gemäß Fig. 2 grundsätzlich entsprechen kann. Der Spindelkopf 18 kann durch geeignete Einwirkungen auf die Handhabe 30 in gewünschter Weise entlang des Maschinenbetts 32 verfahren werden. Aus Gründen der Übersichtlichkeit wurde in Fig. 7 auf eine Darstellung der Führungen 62, 66 bzw. des Werkzeugtisches 52 verzichtet. Das Verfahren oder Positionieren des Spindelkopfes 18 kann grundsätzlich in Richtung der Pfeile 64 bzw. 68 erfolgen. Ferner ist eine Verdrehung oder Verschwenkung des Spindelkopfes 18 denkbar, vgl. den Pfeil 80.

Das Handwerkzeug 10 kann in bestimmter Weise dazu ausgestaltet sein, das manuell gesteuerte Verfahren des Spindelkopfes 18 zu vereinfachen bzw. die Wahrscheinlichkeit von Bedienfehlern deutlich zu verringern. Zu diesem Zweck können entlang eines erlaubten Verfahrbereichs, der etwa durch grundsätzliche Abmessungen des Maschinenbetts 32 begrenzt ist, besondere Bereiche definiert werden. In diesen Bereichen ist der Spindelkopf 18 beispielhaft mit lediglich verringerter Verfahrgeschwindigkeit verfahrbar, oder aber ein Hineinbewegen des Spindelkopfes 18 in diese Bereiche wird gänzlich unterbunden.

Beispielhaft weist das an der Werkstückaufnahme 22 aufgenommene Werkstück 50 einen Schleifabschnitt 104 auf, der etwa definiert mit dem Spindelkopf 18 angefahren werden soll. Zu diesem Zweck kann eine Bereichsgrenze 106 bestimmt werden, die etwa einen Versatz zum Schleifabschnitt 104 aufweist. Die Steuereinrichtung 74 kann dazu ausgebildet sein, den Spindelkopf 18 dann, wenn dieser die Bereichsgrenze 106 überwindet, mit deutlich verringerter Verfahrgeschwindigkeit anzutreiben. Mit 18' ist in Fig. 7 eine Position des Spindelkopfes 18 angedeutet, die sich noch außerhalb der Bereichsgrenze 106 befindet. Beim Übertritt über die Bereichsgrenze kann die Steuereinrichtung 74 beispielhaft von einer Grobbewegung zu einer Feinbewegung des Spindelkopfes 18 übergehen. Somit kann der Bediener den Spindelkopf 18 behutsam mit hoher Genauigkeit an den Schleifabschnitt 104 heranführen.

In ähnlicher Weise kann etwa das manuell gesteuerte Antasten von Referenzpunkten mit dem Spindelkopf 18 erfolgen. Beispielhaft ist in Fig. 7 ein Referenzpunkt 108 dargestellt, der von einer Bereichsgrenze 110 umhüllt ist. Der Spindelkopf 18 kann mit relativ hoher Verfahrgeschwindigkeit an die Bereichsgrenze 110 herangeführt werden. Beim Übertritt über die Bereichsgrenze 110 kann die Steuereinrichtung nunmehr in einen Verfahrmodus wechseln, bei dem der Spindelkopf 18 hochgenau mit deutlich verringerter Verfahrgeschwindigkeit positioniert werden kann. Auf diese Weise kann etwa der Referenzpunkt 108 hochgenau angefahren werden. In einer mit 18" bezeichneten Position ist der Spindelkopf 18 nahe an den Reitstock 42 verfahren. Beispielhaft kann bei einem Fortgang der Verfahrbewegung eine Kollision mit dem Reitstock 42 drohen. Zur Vermeidung derartige Kollisionen kann wiederum eine Bereichsgrenze 112 definiert werden, die etwa die Geometrie des Reitstocks 42 (oder weiterer Komponenten der Werkzeugmaschine 10) unter Berücksichtigung eines Versatzes einhüllt. Die Steuereinrichtung 74 kann dazu ausgebildet sein, eine Bewegung des Spindelkopfes 18 über die Bereichsgrenze 112 gänzlich zu verhindern.

Ein mit 114 bezeichneter Doppelpfeil veranschaulicht, dass die Steuereinrichtung 74 mit einer Vielzahl von Komponenten der Werkzeugmaschine 10 in Kommunikation oder Wirkbeziehung stehen kann, um das manuell gesteuerte Verfahren des Spindelkopfes 18 und die vorbeschriebenen Zusatzfunktionalitäten verwirklichen zu können.

Wie vorstehend bereits erwähnt, kann die Steuereinrichtung 74 ferner etwa dazu ausgestaltet sein, dem Bediener, der an der Handhabe 30 angreift, beim Überschreiten oder Berühren einer der Bereichsgrenzen 106, 110, 112 eine taktile Rückmeldung zu geben. Zu diesem Zweck kann der Verfahrantrieb des Spindelkopfes 18 etwa kurzzeitig oszillierend bzw. vibrierend angesteuert werden, um einen "Ruck" zu erzeugen. Dies kann vom Bediener an der Handhabe 30 erkannt werden. Ein derartiges taktiles "Feedback" erlaubt es dem Bediener, sich vollständig auf das manuell gesteuerte Verfahren des Spindelkopfes 18 zu konzentrieren, ohne von Anzeigeeinrichtungen bzw. Ausgabeeinrichtungen optischer oder akustischer Art abgelenkt zu werden.

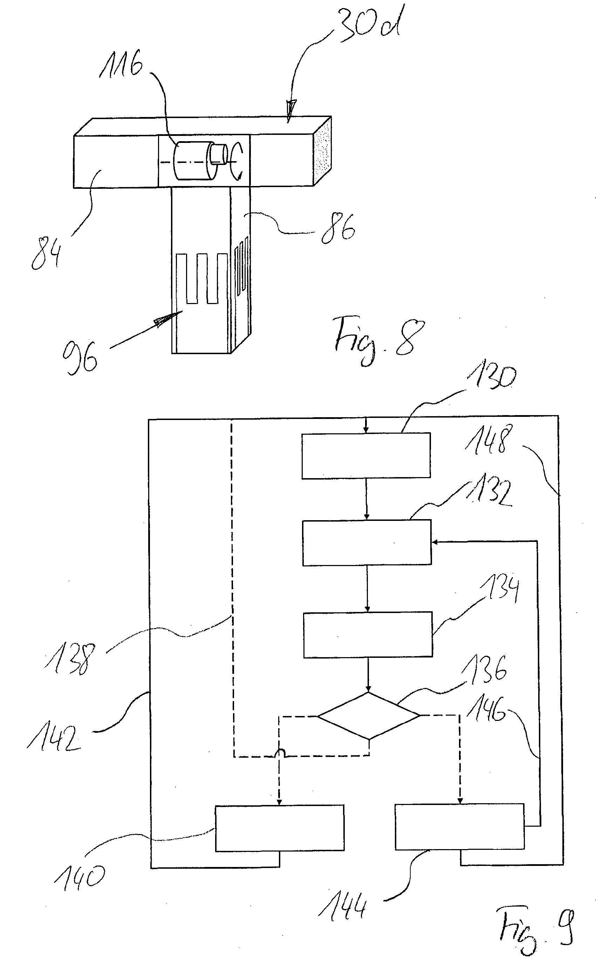

Fig. 8 zeigt eine weitere beispielhafte Ausgestaltung einer Handhabe 30d, die etwa in Grundzügen der Handhabe 30c gemäß Fig. 5 entsprechen kann. Die Handhabe 30d weist einen Vibrationsgeber 116 auf, der etwa als Vibrationsmotor gestaltet sein kann. Mit Hilfe des Vibrationsgebers 116 kann direkt an der Handhabe 30d eine taktile Rückmeldung erzeugt werden, etwa um das Erreichen oder Überschreiten der in Fig. 7 angedeuteten Bereichsgrenzen 106, 110, 112 deutlich zu machen. Eine taktile Rückmeldung kann grundsätzlich auch durch weitere Einflussfaktoren ausgelöst werden. Hierzu können etwa eine übermäßige Handhabungskraft, das Erreichen einer vorgegebenen maximalen Verfahrgeschwindigkeit oder Ähnliches herangezogen werden.

Fig. 9 veranschaulicht in stark vereinfachter Weise anhand eines schematischen Flussdiagramms ein beispielhaftes Verfahren zum Positionieren eines Spindelkopfes einer Werkzeugmaschine, insbesondere einer Schleifmaschine.

In einem Schritt 130 werden Einwirkungen erfasst, die ein Bediener auf eine Handhabe ausübt, die an einem Spindelkopf der Werkzeugmaschine angebracht ist. Die Einwirkungen können zumindest eine Richtungsinformation oder eine Kraftinformation aufweisen, welche erfasst und einer Auswertung zugeführt werden können.

In einem weiteren Schritt 132 werden Steuerungsbefehle zur Ansteuerung eines Verfahrantriebs erzeugt, dies kann unter Berücksichtigung von Bewegungsparametern erfolgen, die abhängig von erfassten Einwirkungen gewählt werden. Bei den Bewegungsparametern kann es sich etwa um eine Verfahrrichtung, Verfahrgeschwindigkeit oder um eine Verfahrbeschleunigung handeln.

In einem weiteren Schritt 134 wird der Spindelkopf mit dem Verfahrantrieb unter Berücksichtigung der Steuerungsbefehle verfahren, dies kann insbesondere relativ zu einer Werkstückaufnahme der Werkzeugmaschine erfolgen.

Das Verfahren des Spindelkopfes kann einer permanenten Überwachung unterliegen, Schritt 136. Die Überwachung kann etwa eine Ist-Position des Spindelkopfes und einen Vergleich mit erlaubten Bewegungsbereichen für den Spindelkopf umfassen. Wird im Zuge der Überwachung festgestellt, dass der Spindelkopf weiterhin im erlaubten Verfahrbereich positioniert ist, können die Schritte des Erfassens, Erzeugen von Steuerungsbefehlen und des Verfahrens wiederholt werden, vgl. einen Pfeil 138. Die Überwachung kann sich jedoch auch auf Einflussfaktoren beziehen, anhand derer eine selektive taktile Rückmeldung an der Handhabe erzeugt werden kann. Ergibt die Überwachung beispielsweise, dass der Spindelkopf einen unerlaubten Bereich tangiert oder gar überschritten hat, kann dies dem Bediener mittels einer taktilen Rückmeldung deutlich gemacht werden, Schritt 140. Es können sich erneut die Schritte des Erfassens, Erzeugen von Steuerungsbefehlen und des Verfahrens anschließen, Pfeil 142.

Zusätzlich oder alternativ kann das Überwachen dazu genutzt werden, anhand von erfassten Ist-Positionen des Spindelkopfes und eines Vergleichs mit erlaubten und unerlaubten Bewegungsbereichen festzustellen, ob der Schritt des Erzeugens von Steuerungsbefehlen variiert werden soll, Schritt 144. Dies kann etwa beinhalten, dass den erfassten Einwirkungen geänderte Bewegungsparameter zugeordnet werden. Beispielhaft kann eine "Kennlinie" zwischen den erfassten Einwirkungen und den diesen gegenübergestellten Bewegungsparametern verändert werden. Dies kann etwa so weit gehen, ein Stoppen oder Verzögern des Spindelkopfes zu veranlassen, wenn dieser in einen unerlaubten Bereich übertritt.

Anstatt unerlaubter Bereiche können ebenso jedoch auch sogenannte Näherungsbereiche auslösend für eine derartige Variation sein. Auf diese Weise kann etwa bei der Annäherung an einen Referenzpunkt zunächst eine hohe Verfahrgeschwindigkeit für den Spindelkopf und bei entsprechend verringertem Abstand eine niedrige Verfahrgeschwindigkeit gewählt werden. Die Einwirkung auf den Schritt des Erzeugens von Steuerungsbefehlen wird durch einen mit 146 bezeichneten Pfeil veranschaulicht. Auch an den Variationsschritt 144 können sich die Schritte des Erfassens, Erzeugen von Steuerungsbefehlen und des Verfahrens aufs Neue anschließen, vgl. einen mit 148 bezeichneten Pfeil.

## Patentansprüche

1. Werkzeugmaschine zur Bearbeitung von Werkstücken, insbesondere Schleifmaschine, mit einer Werkstückaufnahme (22) zur Aufnahme eines Werkstücks (50), mit einem Spindelkopf (18) zur Aufnahme eines Werkzeugs (20), insbesondere einer Schleifscheibe, wobei der Spindelkopf (18) relativ zur Werkstückaufnahme (22) motorisch verfahrbar ist, wobei am Spindelkopf (18) eine Handhabe (30) angeordnet ist, die zumindest einen Aufnehmer (96) aufweist, der dazu ausgebildet ist, eine Einwirkung auf die Handhabe (30) zu erfassen, und wobei eine Steuereinrichtung (74) vorgesehen ist, die dazu ausgebildet ist, in zumindest einem Betriebsmodus den Spindelkopf (18) abhängig von den erfassten Einwirkungen auf die Handhabe (30) definiert motorisch zu verfahren.

2. Werkzeugmaschine (10) nach Anspruch 1, wobei der Aufnehmer (96) dazu ausgebildet ist, eine Handhabungskraft (F_{X}, F_{Z}) zu erfassen, die auf die Handhabe (30) aufgebracht wird.

3. Werkzeugmaschine (10) nach Anspruch 1 oder 2, ferner aufweisend einen Verfahrantrieb (70, 72), der zumindest eine gesteuerte Achse (64, 68) für den Spindelkopf (18) aufweist, wobei die Steuereinrichtung (74) dem Verfahrantrieb (70, 72) Steuerbefehle zuführt, die abhängig von den erfassten Einwirkungen auf die Handhabe (30) erzeugt sind.

4. Werkzeugmaschine (10) nach einem der vorhergehenden Ansprüche, wobei der zumindest eine Aufnehmer (96) zumindest einen Sensor (98, 100, 102) zur Erfassung von Verformungen der Handhabe (30) aufweist.

5. Werkzeugmaschine (10) nach einem der vorhergehenden Ansprüche, wobei der zumindest eine Aufnehmer (96) dazu ausgebildet ist, Verformungen der Handhabe (30) in zumindest zwei Raumrichtungen zu erfassen.

6. Werkzeugmaschine (10) nach einem der Ansprüche 3 bis 5, wobei die Steuereinrichtung (74) dazu ausgebildet ist, Steuerbefehle zu erzeugen, die zumindest einen Bewegungsparameter aufweisen, der abhängig von einer detektierten Handhabungskraft (F_{X}, F_{Z}) ist, insbesondere zumindest von einer Höhe oder Richtung der Handhabungskraft (F_{X}, F_{Z}).

7. Werkzeugmaschine (10) nach Anspruch 6, wobei die Steuerbefehle eine definierte Verfahrgeschwindigkeit umfassen, die abhängig von der detektierten Handhabungskraft (F_{X}, F_{Z}) ist.

8. Werkzeugmaschine (10) nach einem der Ansprüche 6 oder 7, wobei die Steuerbefehle eine Verfahrrichtung umfassen, die abhängig von einer Richtungskomponente der detektierten Handhabungskraft (F_{X}, F_{Z}) ist.

9. Werkzeugmaschine (10) nach einem der Ansprüche 3 bis 8, wobei die Steuereinrichtung (74) dazu ausgebildet ist, Steuerbefehle zum Verfahren des Spindelkopfes (18) zu erzeugen, die von zumindest einem weiteren Einflussfaktor abhängig sind, insbesondere von einer Ist-Position des Spindelkopfes (18).

10. Werkzeugmaschine (10) nach Anspruch 9, wobei die Steuereinrichtung (74) dazu ausgebildet ist, die Verfahrgeschwindigkeit des Spindelkopfes (18) anzupassen oder das Verfahren des Spindelkopfes (18) zu stoppen, wenn der Spindelkopf (18) beim Verfahren in einen definierten Bereich (106, 108, 112) eindringt.

11. Werkzeugmaschine (10) nach einem der vorhergehenden Ansprüche, wobei die Handhabe (30) als Bediengriff ausgebildet ist und wobei die Handhabe (30) einen Detektionsbereich (94) aufweist, der elastisch verformbar ist und insbesondere eine hohe Steifigkeit aufweist, und wobei der zumindest eine Aufnehmer (96) im Detektionsbereich (94) appliziert ist.

12. Werkzeugmaschine (10) nach einem der vorhergehenden Ansprüche, wobei der Handhabe (30) ein Aktivierungsschalter (90) zugeordnet ist.

13. Werkzeugmaschine (10) nach einem der vorhergehenden Ansprüche, wobei die Steuereinrichtung (74) ferner dazu ausgebildet ist, abhängig von zumindest einem Einflussfaktor eine selektive taktile Rückmeldung an der Handhabe (30) zu erzeugen.

14. Werkzeugmaschine (10) nach Anspruch 13, wobei die taktile Rückmeldung durch zumindest einen Vibrationsgeber (116), der an der Handhabe (30) angebracht ist, oder durch einen Bewegungsimpuls im Verfahrantrieb (70, 72) des Spindelkopfes (18) erzeugt wird.

15. Verfahren zum Positionieren eines Spindelkopfes (18) einer Werkzeugmaschine (10) zur Bearbeitung von Werkstücken, insbesondere einer Schleifmaschine, in zumindest einem Betriebsmodus, mit den folgenden Schritten:
- Erfassen von Einwirkungen auf eine Handhabe (30), wobei die Handhabe (30) am Spindelkopf (18) angebracht ist, und wobei die Einwirkungen zumindest eine Richtungsinformation oder eine Kraftinformation aufweisen,
- Erzeugen von Steuerbefehlen zur Ansteuerung eines Verfahrantriebs (70, 72) unter Berücksichtigung von Bewegungsparametern, die abhängig von den erfassten Einwirkungen gewählt werden, und
- Verfahren des Spindelkopfes (18) mit dem Verfahrantrieb (70, 72) unter Berücksichtigung der Steuerbefehle, wobei der Verfahrantrieb (70, 72) dazu ausgebildet ist, den Spindelkopf (18) relativ zu einer Werkstückaufnahme (22) definiert motorisch zu verfahren.

## Claims

1. A machine tool for machining workpieces, particularly a grinding machine, comprising a workpiece holder (22) for accomodating a workpiece (50), a spindle head (18) for receiving a tool (20), particularly a grinding wheel, wherein the spindle head (18) is movable by motor with respect to the workpiece holder (22), wherein a handle (30) is arranged at the spindle head (18) and comprises at least one detector (96) that is arranged to detect an impact on the handle (30), and wherein a control device (74) is provided that is configured to move the spindle head (18) in at least one operation mode by motor in a defined manner dependent on detected impacts on the handle (30).

2. The machine tool (10) according to claim 1, wherein the detector (96) is arranged to detect an actuating force (F_{X}, F_{Z}) that is applied to the handle (30).

3. The machine tool (10) according to claim 1 or 2, further comprising a displacement drive (70, 72) comprising at least one controlled axis (64, 68) for the spindle head (18), wherein the control device (74) signals control commands to the displacement drive (70, 72) that are generated dependent on the detected impacts on the handle (30).

4. The machine tool (10) according to any of the preceding claims, wherein the at least one detector (96) comprises at least one sensor (98, 100, 102) for detecting deformations of the handle (30).

5. The machine tool (10) according to any of the preceding claims, wherein the at least one detector (96) is configured to detect deformations of the handle (30) in at least two directions in space.

6. The machine tool (10) according to any of the claims 3 to 5, wherein the control device (74) is configured to generate control commands comprising at least one motion parameter that is dependent on a detected actuating force (F_{X}, F_{Z}), particularly dependent on at least one of a level or direction of the actuating force (F_{X}, F_{Z}).

7. The machine tool (10) according to claim 6, wherein the control commands comprise a defined travel speed that is dependent on the detected actuating force (F_{X}, F_{Z}).

8. The machine tool (10) according to claim 6 or 7, wherein the control commands comprise a travel direction that is dependent on a directional component of the detected actuating force (F_{X}, F_{Z}).

9. The machine tool (10) according to any of the claims 3 to 8, wherein the control device (74) is configured to generate control commands for displacing the spindle head (18) that are dependent on at least a further influencing factor, particularly dependent on an actual position of the spindle head (18).

10. The machine tool (10) according to claim 9, wherein the control device (74) is arranged to adapt the travel speed of the spindle head (18), or to stop the movement of the spindle head (18), when the spindle head (18), when moving, enters a defined region (106, 108, 112).

11. The machine tool (10) according to any of the preceding claims, wherein the handle (30) is arranged as an operating handle and comprises a detection region (94) that is elastically deformable and that particularly comprises a high stiffness, and wherein the at least one detector (96) is applied at the detection region (94).

12. The machine tool (10) according to any of the preceding claims, wherein an activation switch (90) is assigned to the handle (30).

13. The machine tool (10) according of any of the preceding claims, wherein the control device (74) is further arranged to generate, dependent on at least one influencing factor, a selective tactile feedback at the handle (30).

14. The machine tool (10) according to claim 13, wherein the tactile feedback is generated by at least one vibration transducer (116) that is arranged at the handle (30), or by means of a kinetic momentum generated at the displacement drive (70, 72) of the spindle head (18).

15. A method for positioning a spindle head (18) of a machine tool (10) for machining workpieces, particularly a grinding machine, in at least one operation mode, the method comprising the following steps:
- detecting impacts on a handle (30), wherein the handle (30) is attached to a spindle head (18), and wherein the impacts comprise at least one of a direction information or a force information,
- generating control commands for controlling a displacement drive (70, 72) dependent on motion parameters that are selected dependent on the detected impacts, and
- moving the spindle head (18) by means of the displacement drive (70, 72) dependent on the control commands, wherein the displacement (70, 72) is arranged to move the spindle head (18) by motor in a defined manner with respect to a workpiece holder (22).

## Revendications

1. Machine-outil pour le traitement de pièces usinées, notamment ponceuse, avec un logement de pièce usinée (22) pour loger une pièce usinée (50), avec une tête de broche (18) pour loger un outil (20), notamment un disque abrasif, la tête de broche (18) pouvant être déplacée de façon motorisée par rapport au logement de pièce usinée (22), une manette (30) étant disposée au niveau de la tête de broche (18) comportant au moins un élément récepteur (96) réalisé pour détecter une action sur la manette (30) et un dispositif de commande (74) étant prévu, celui-ci étant réalisé pour déplacer de façon motorisée, de façon définie, dans au moins un mode de fonctionnement, la tête de broche (18) en fonction des actions détectées sur la manette (30).

2. Machine-outil (10) selon la revendication 1, l'élément récepteur (96) étant réalisé pour détecter une force de manipulation (F_{X}, F_{Z}) appliquée sur la manette (30).

3. Machine-outil (10) selon la revendication 1 ou 2, comportant en outre un Entraînement de déplacement (70, 72) comportant au moins un axe (64, 68) commandé pour la tête de broche (18), le dispositif de commande (74) envoyant des ordres de commande à l'Entraînement de déplacement (70, 72), lesdits ordres étant produits en fonction des actions détectées sur la manette (30).

4. Machine-outil (10) selon l'une quelconque des revendications précédentes, l'au moins un élément récepteur (96) comportant au moins un capteur (98, 100, 102) pour détecter des déformations de la manette (30).

5. Machine-outil (10) selon l'une quelconque des revendications précédentes, l'au moins un élément récepteur (96) étant réalisé pour détecter les déformations de la manette (30) dans au moins deux directions dans l'espace.

6. Machine-outil (10) selon l'une quelconque des revendications 3 à 5, le dispositif de commande (74) étant réalisé pour produire des ordres de commande comportant au moins un paramètre de mouvement dépendant d'une force de manipulation (F_{X}, F_{Z}) détectée, notamment d'au moins une hauteur ou direction de la force de manipulation (F_{X}, F_{Z}).

7. Machine-outil (10) selon la revendication 6, les ordres de commande comprenant une vitesse de déplacement définie dépendant de la force de manipulation (F_{X}, F_{Z}) détectée.

8. Machine-outil (10) selon l'une quelconque des revendications 6 ou 7, les ordres de commande comprenant une direction de déplacement dépendant d'une composante de direction de la force de manipulation (F_{X}, F_{Z}) détectée.

9. Machine-outil (10) selon l'une quelconque des revendications 3 à 8, le dispositif de commande (74) étant réalisé pour produire des ordres de commande servant à déplacer la tête de broche (18), lesdits ordres dépendant d'au moins un facteur d'influence supplémentaire, notamment d'une position réelle de la tête de broche (18).

10. Machine-outil (10) selon la revendication 9, le dispositif de commande (74) étant réalisé pour adapter la vitesse de déplacement de la tête de broche (18) ou pour arrêter le déplacement de la tête de broche (18) lorsque la tête de broche (18) rentre, lors du déplacement, dans une zone définie (106, 108, 112).

11. Machine-outil (10) selon l'une quelconque des revendications précédentes, la manette (30) étant réalisée sous la forme d'une poignée de commande et la manette (30) comportant une zone de détection (94) déformable de façon élastique et comportant notamment une rigidité élevée et l'au moins un élément récepteur (96) étant appliqué dans la zone de détection (94).

12. Machine-outil (10) selon l'une quelconque des revendications précédentes, un commutateur d'activation (90) étant associé à la manette (30).

13. Machine-outil (10) selon l'une quelconque des revendications précédentes, le dispositif de commande (74) étant en outre réalisé pour produire une réaction tactile sélective au niveau de la manette (30) en fonction d'au moins un facteur d'influence.

14. Machine-outil (10) selon la revendication 13, la réaction tactile étant produite par au moins un émetteur de vibrations (116) placé au niveau de la manette (30) ou par un impulseur de mouvement prévu dans l'Entraînement de déplacement (70, 72) de la tête de broche (18).

15. Procédé de positionnement d'une tête de broche (18) d'une machine-outil (10) pour le traitement de pièces usinées, notamment d'une ponceuse, dans au moins un mode de fonctionnement, avec les étapes suivantes :
- détection d'actions sur une manette (30), la manette (30) étant placée au niveau de la tête de broche (18) et les actions comportant au moins une information de direction ou une information de force ;
- envoi d'ordres de commande pour commander un entraînement de déplacement (70, 72) en tenant compte de paramètres de mouvement sélectionnés en fonction des actions détectées ; et
- déplacement de la tête de broche (18) à l'aide de l'entraînement de déplacement (70, 72) en tenant compte des ordres de commande, l'entraînement de déplacement (70, 72) étant réalisé pour déplacer de façon motorisée, de façon définie, la tête de broche (18) par rapport à un logement de pièce usinée (22).
